# EUROPEAN PATENT SPECIFICATION

(11) **EP 1 193 420 B1**
(45) Date of publication and mention of the grant of the patent: **13.07.2005**
(21) Application number: 01203410.4
(22) Date of filing: 10.09.2001
(51) Int. Cl.: F16G 13/16

(54) **Trolley for cable supporting chain**
Schlitten für Kabelführungskette
Chariot pour chaine de support de cables

(30) Priority: 29.09.2000 IT MI200549 U
(43) Date of publication of application: 03.04.2002
(73) Proprietor: Mauri, Giovanni, 20052 Monza (IT)
(72) Inventor: Mauri, Giovanni, 20052 Monza (IT)
(74) Representative: Riccardi, Sergio

(56) References cited:
- EP-A- 0 725 228
- GB-A- 1 143 540

## Description

The present invention relates to a trolley for cable supporting chain.

Cable supporting chains have been known and used since several years for conveyance of energy or fluids in many industrial applications. Said chains generally slide in a guide channel, as it is practically impossible to make a self bearing cable supporting chain, allowing the upper portion of the chain to move remaining parallel to the lower portion. Therefore said chains fall and slide on themselves generating a considerable friction in spite of use of special self lubricating materials. Said friction becomes excessive for the forces involved if the chain has a considerable length (over 60- 80 meters) or high loads per length unit.

In order to remove this inconvenience mobile trolleys were devised which are interposed between the two chain portions so that the chain does not slide on itself with its lower and upper portions.

More particularly the document EP 0725228 B1 granted on April 5, 2000 to Hubbell Incorporated, discloses a trolley for cable supporting chain wherein said chains having a predetermined bending radius are spaced and not supported by the trolley and its members at the bend formed near the user to which trolley and chains are connected, while said trolley assists the movement of the chains by the friction engagement between some members generally consisting of rollers and said chains.

Although the above mentioned prior art trolley and chain assembly solves said technical problem, it has however some drawbacks.

Indeed said sliding members or rollers provided in the known trolley, slide both on the upper chain portion arranged above the trolley and on the lower chain portion thus generating a strong friction that is the source of very high dissipation although it is used to move the trolley and chain assembly.

Such a high friction is due to the fact that the trolley for practical reasons generally has a linear length approximately equal to the half of the stroke of the user fed by the chain and therefore the upper chain portion moves at a double linear velocity relative to the trolley which in turn is moving relative to the standstill lower chain portion. Therefore if the same rollers of the trolley are sliding at the same time on both chain portions, the upper chain portion is practically dragged, because the rollers tend to keep a surface speed equal to the trolley speed, and this drag will cause high dissipation and several maintenance problems.

The object of the present invention is to remove the drawbacks of the prior art.

Therefore object of the present invention is to provide a trolley for cable supporting chain of simple structure adapted to eliminate most friction generated between trolley and chain so as to carry out the trolley and chain assembly more efficient as to wear and energy consumption and more reliable as to useful life.

Briefly the present invention provides for a trolley for cable supporting chain comprising a body at whose ends one or more pulleys are connected and associated to ropes constrained at their ends to a mobile user fed by said cable supporting chain and connected to the ends of the upper chain portion, said chain being operatively associated to said trolley in such a way that a length of said upper chain portion is not in contact with said trolley, with a configuration determined by gravity according to the physical features of the chain links and the load to be supported, while said lower chain portion is generally static relative to said trolley, wherein said trolley and said chain are operatively associated to each other through separate rollers or roller lines between trolley and said lower chain portion and trolley and said upper chain portion.

Accordingly the trolley for cable supporting chain of the invention is characterized by comprising the features indicated in claim 1). Other advantageous features are set forth in the dependent claims.

Further advantages, features and details of the trolley for cable supporting chain according to the invention will be better understood by reading the following description with reference to the accompanying drawings in which some preferred embodiments are shown as an illustrative but non limiting example.
- Fig. 1 is a partial perspective schematic view of the trolley for cable supporting chain according to the invention.

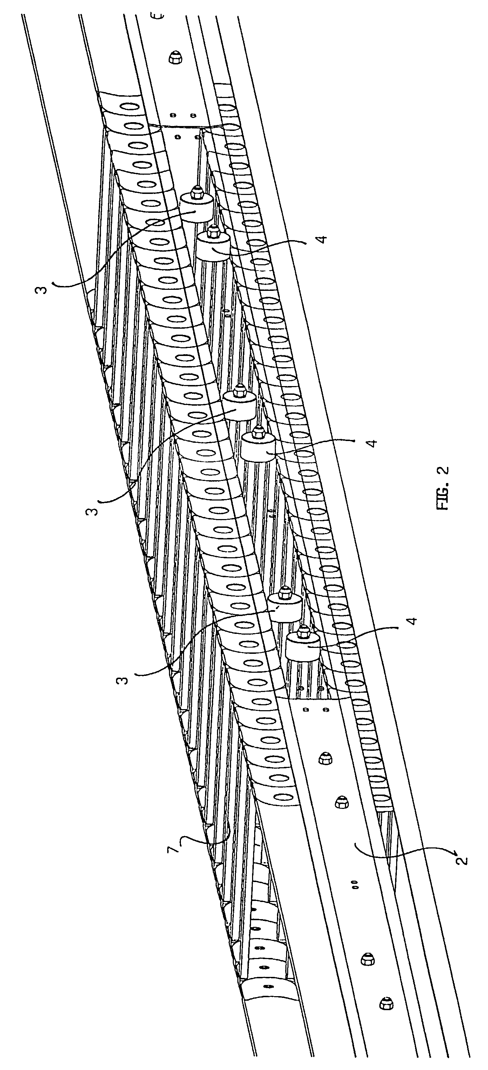

- Fig.2 is a partial perspective view of said trolley.
- Fig. 3 is a broken cross sectional view of the trolley for cable supporting chain according to the invention.
- Fig. 4 is a cross sectional view of a second embodiment of the trolley for cable supporting chain of the invention.
- Fig. 5 is a cross sectional view of another embodiment of the trolley of the invention.

With reference now to the above mentioned figures of the drawings, the trolley for cable supporting chain according to the invention has a body 2 of a generally parallelepipedal form and a length preferably equal to about the half of the stroke of the mobile user (not shown) fed by a chain 7 associated to trolley 1.

Said body 2 has a plurality of rollers whose centers of rotation on each side of the trolley 1 are arranged along two different parallel lines, an upper line 3, 16 and a lower line 4,15, also the upper lines 3, 16 and the lower lines 4, 15 of the two sides of the trolley 1, 30 being parallel to each other.

Said body 2 is also provided at its ends with pulleys 5 to which control and movement means such as ropes 6 are operatively associated. Said ropes 6 are fixed at the ends to the moving point of said user and during operation said ropes 6 slide on the pulleys 5 causing the trolley 1, 20, 30 to move.

Said chain 7 has also its ends fixed to said user, and is associated to the trolley 1, 20, 30 by sliding on said rollers as it will be better described hereinafter.

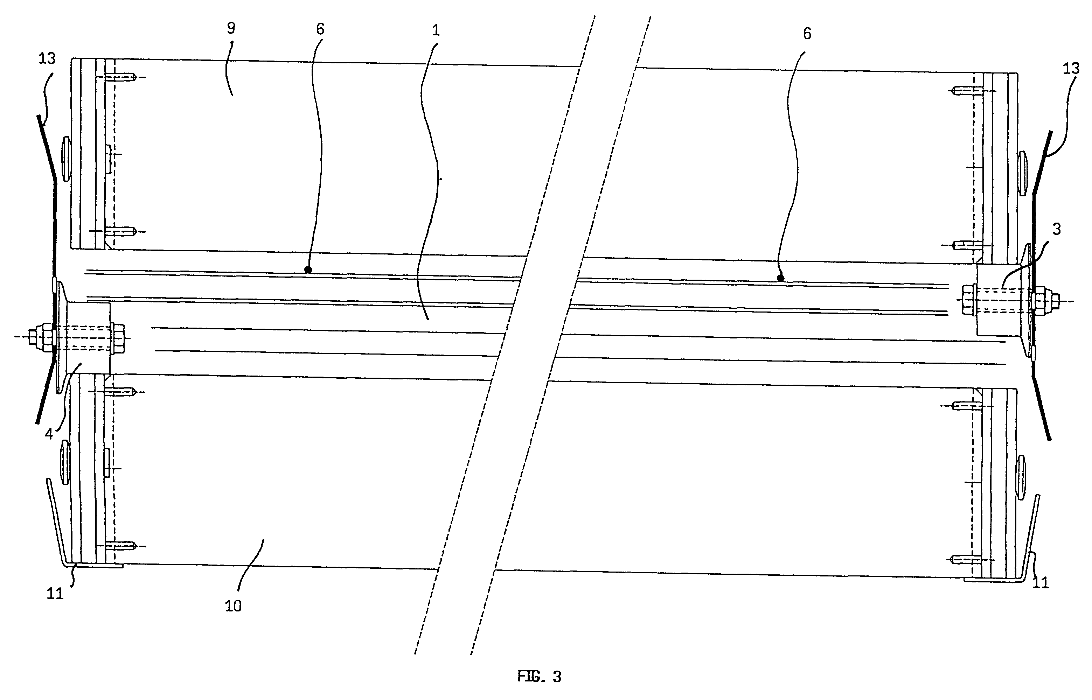

More particularly in a first embodiment of the trolley 1 according to the invention shown in Fig. 3, the upper lines 3 and the lower lines 4 are in contact with an upper portion 9 of the chain 7 above the trolley 1 and a lower portion 10 of the chain 7 below the trolley respectively, a lower channel 11 contains the lower chain portion 10 while the side walls 13 of the trolley 1 are acting as a guide for the upper portion 9 of said chain 7.

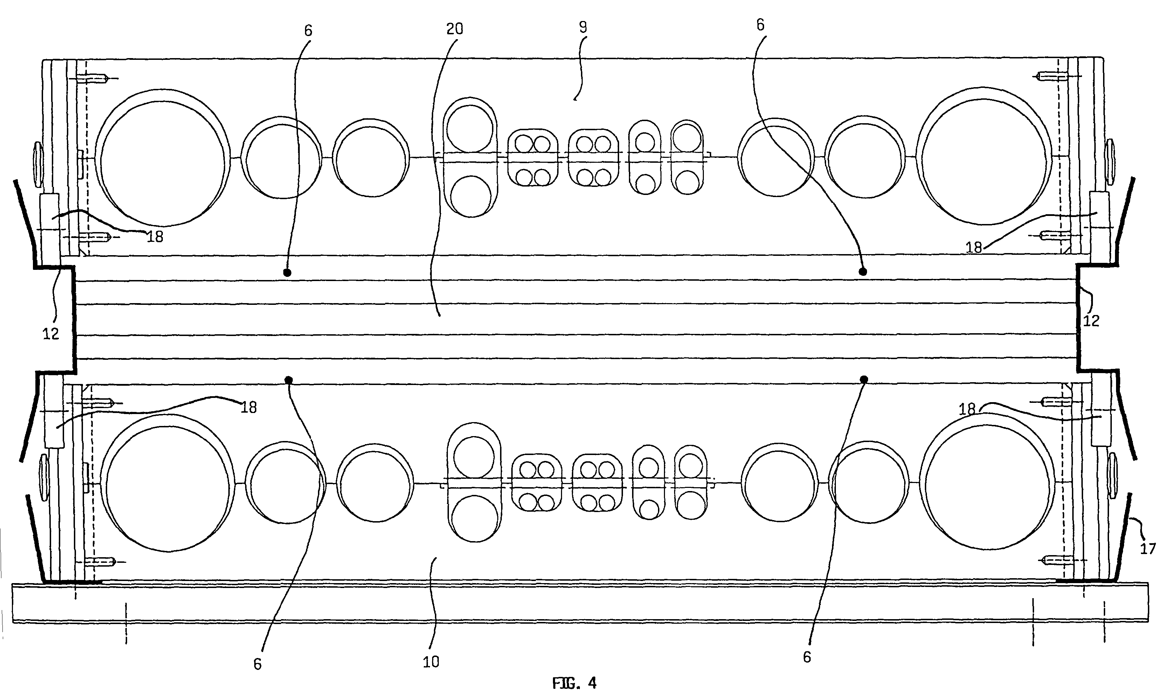

In a second embodiment of the trolley 20 according to the invention, as shown in Fig. 4, instead of having said roller lines 3 and 4, the trolley is provided at its side ends with a sliding channel 12 in the form of an inverted C allowing a plurality of rollers 18 mounted directly on the chain 7 to slide and be guided above and below the trolley, while a lower channel 17 allows the lower portion 10 of the chain 7 to slide.

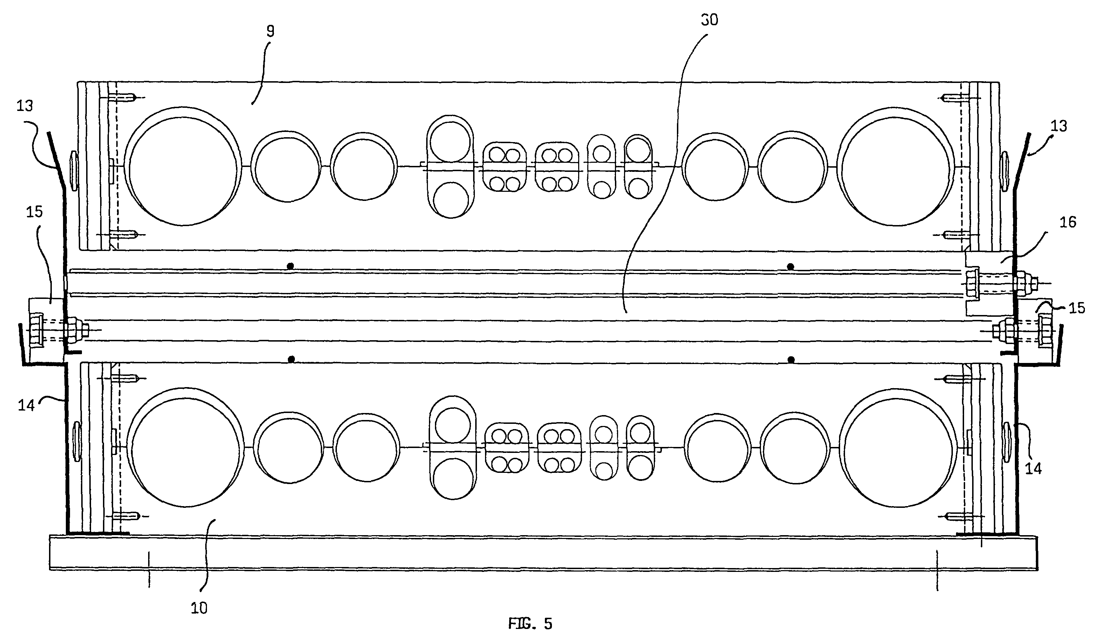

In a further embodiment shown in Fig. 5, a trolley 30 is provided with a lower channel 14 having a greater height than the preceding one and having a sectional form of an inverted S guiding the lower portion 10 of the chain 7, while the trolley 30 is resting on said channel with a lower line of rollers 15 all arranged outside its walls, while in the upper part upper lines of rollers 16 all inside the walls of the trolley 30 cause the upper portion 9 of chain 7 to slide thereon, and finally the side walls 13 of the trolley 30 enclose and guide the movement of the upper portion 9 of chain 7 as in the first embodiment.

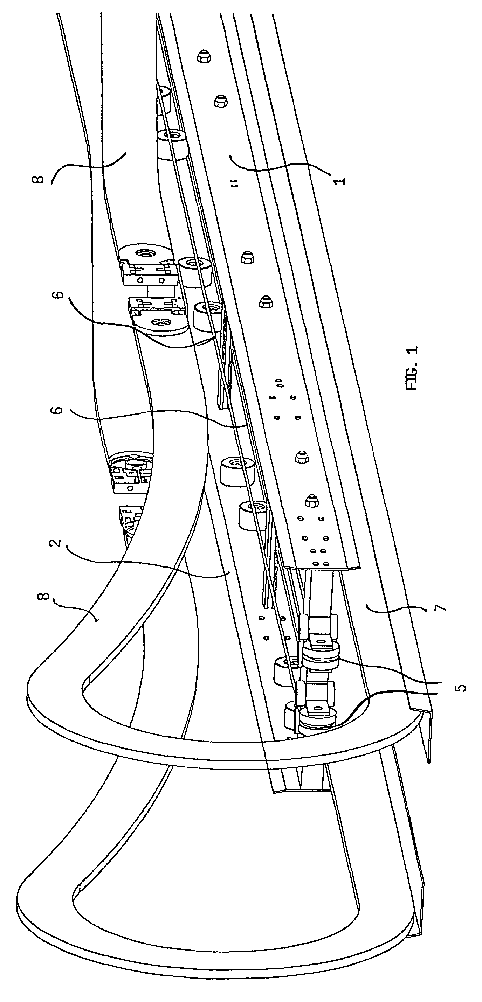

It is also to be noted that as shown in Fig. 1, irrespective of the form of each link of the chain 7, whether or not having a predetermined bend, there will be always a length 8 of said chain near said user, at which said chain is cleared from the trolley 1, 20, 30, and has a bend determined by gravity according to the physical features of the chain itself and of any other element associated thereto such as cylinders to set the bend, number and weight of the cables and so on.

The general operation of the trolley for cable supporting chain according to the invention is substantially similar to the prior art trolleys. The mobile user fed by the chain 7 supported by trolley 1, 20, 30, is moving being constrained at the ends of said chain and to ropes 6 sliding on pulleys 5 connected to the trolley 1, 20, 30. As the length of the user stroke is approximately double relative to the trolley length and the chain 7 with its upper portion 9 is directly constrained on said user, said upper portion 9 of chain 7 will have a linear velocity equal to the user and double of the trolley 1, 20, 30, while the lower portion 10 of the chain 7 is substantially standstill.

In the trolley of the invention the friction forces between the upper portion 9 of chain 7 and the trolley 1, 20, 30 are almost totally absent, because unlike what happens in the prior art trolleys, in each embodiment shown and every different version thereof in view of the described arrangement of rollers between trolley and chain, there is a rolling motion of the trolley on the lower portion 10 of chain 6 and a rolling motion of the upper portion 9 of chain on trolley 1, 20, 30.

This is due because in each case there are different rollers or roller lines in contact between trolley and lower portion of the chain and between trolley and upper portion of the chain, respectively. Indeed this kind of kinematic motion is allowed by the embodiment shown in Fig. 4 with the rollers arranged on the chain as well as by the embodiments with the rollers on the trolley 1, 30 of Figs. 3 and 5 respectively, wherein the rollers are arranged on the trolley all inside the trolley walls (Fig. 3) or inside and outside said walls (fig. 5), respectively. Therefore any drag of said chain 7 on the trolley 1, 20, 30 is excluded and as a consequence frictions are strongly reduced, less energy is dissipated and the reliability of the assembly is generally improved.

Obviously what disclosed for one individual chain may be attained in the same way for applications with trolleys provided with more chains.

It is clear that many modifications, adaptations, additions, variations and substitutions may be made to the embodiments hereinbefore described as illustrative and non limiting examples, without however falling outside the scope of the invention as indicated in the following appended claims.

## Claims

1. A trolley for cable supporting chain, comprising a body (2) at whose ends one or more pulleys (5) are connected and associated to ropes (6) constrained at their ends to a mobile user fed by said cable supporting chain (7) and constrained to the ends of the upper portion (9) of said cable supporting chain (7), said chain (7) being operatively associated to said trolley (1, 20, 30) so that a length (8) of said upper portion (9) is not in contact with said trolley (1, 20, 30), with a configuration determined by gravity by the physical features of its links and the load supported by the chain, while the lower portion (10) of said chain (7) is substantially standstill relative to said trolley (1, 20, 30), said trolley (1, 20, 30) and said chain (7) being operatively associated to each other through different rollers (18) or roller lines (3, 4, 15, 16) between trolley (1, 20, 30) and said lower chain portion (10) and between trolley (1, 20, 30) and said upper chain portion (9) respectively, **characterized in that** said body (2) of said trolley (1) and said trolley (30) are provided with a plurality of rollers whose centers of rotation on each side of the trolley (1, 30) are arranged along two different parallel lines, an upper line (3, 16) and a lower line (4, 15).

2. The trolley for cable supporting chain according to claim 1, **characterized in that** said upper lines (3) and lower lines (4) of said rollers on both sides of the trolley (1) are parallel to each other and inside lateral walls (13) of said trolley (1), said upper lines (3) and lower lines (4) of said rollers being in contact with said upper portion (9) of chain (7) above the trolley (1) and with the lower portion (10) of chain (7) below the trolley (1) respectively, a lower channel (11) containing said lower portion (10), while said lateral walls (13) of trolley (1) are acting as a guide for the upper portion (9) of said chain (7).

3. The trolley for cable supporting chain according to claim 1, **characterized in that** said trolley (30) is provided with a lower channel (14) having the form of an inverted S so as to guide said lower portion (10) of said chain (7) while the trolley (30) is resting on said channel with said lower line (15) of rollers all arranged outside its walls (13), while said upper lines (16) of rollers all arranged inside the walls (13) of the trolley (30) cause said upper portion (9) of the chain (7) to slide thereon, the lateral walls (13) of trolley (30) containing and guiding the movement of the upper portion (9) of chain (7).

## Patentansprüche

1. Schlitten für Kabelführungskette, umfassend einen Körper (2), an dessen Enden eine oder mehrere Seilscheiben (5) mit Seilen (6) verbunden und angeschlossen sind, die an ihren Enden an einem beweglichen Verbraucher eingespannt sind, der durch die Kabelführungskette (7) gespeist wird, und die an den Enden des oberen Abschnitts (9) der Kabelführungskette (7) eingespannt sind, wobei die Kette (7) funktional derart mit dem Schlitten (1, 20, 30) verbunden ist, dass eine Länge (8) des oberen Abschnitts (9) mit dem Schlitten (1, 20, 30) nicht in Kontakt ist, mit einer Konfiguration, die durch die Schwerkraft durch die physikalischen Merkmale ihrer Glieder und die durch die Kette geführte Last bestimmt ist, während der untere Abschnitt (10) der Kette (7) in Bezug auf den Schlitten (1, 20, 30) im Wesentlichen stillsteht, wobei der Schlitten (1, 20, 30) und die Kette (7) durch verschiedene Rollen (18) oder Rollenlinien (3, 4, 15, 16) zwischen dem Schlitten (1, 20, 30) und dem unteren Kettenabschnitt (10) bzw. zwischen dem Schlitten (1, 20, 30) und dem oberen Kettenabschnitt (9) funktional miteinander verbunden sind, **dadurch gekennzeichnet, dass** der Körper (2) des Schlittens (1) und der Schlitten (30) mit einer Vielzahl von Rollen versehen sind, deren Drehungsmittelpunkte auf jeder Seite des Schlittens (1, 30) entlang zwei unterschiedlichen parallelen Linien, einer oberen Linie (3, 16) und einer unteren Linie (4, 15), angeordnet sind.

2. Schlitten für Kabelführungskette nach Anspruch 1, **dadurch gekennzeichnet, dass** die oberen Linien (3) und unteren Linien (4) der Rollen zu beiden Seiten des Schlittens parallel zueinander und innerhalb von Seitenwänden (13) des Schlittens (1) sind, wobei die oberen Linien (3) und unteren Linien (4) der Rollen mit dem oberen Abschnitt (9) der Kette (7) oberhalb des Schlittens (1) bzw. mit dem unteren Abschnitt (10) der Kette (7) unterhalb des Schlittens (1) in Kontakt sind, wobei ein unterer Kanal (11) den unteren Abschnitt (10) enthält, während die Seitenwände (13) des Schlittens (1) als Führung für den oberen Abschnitt (9) der Kette (7) dienen.

3. Schlitten für Kabelführungskette nach Anspruch 1, **dadurch gekennzeichnet, dass** der Schlitten (30) mit einem unteren Kanal (14) versehen ist, der die Form eines umgekehrten S hat, so dass er den unteren Abschnitt (10) der Kette (7) führt, während der Schlitten (30) auf dem Kanal ruht, wobei die untere Linie (15) der Rollen vollständig außerhalb seiner Wände (13) angeordnet ist, während die oberen Linien (16) der Rollen, die vollständig innerhalb der Wände (13) des Schlittens (13) angeordnet sind, bewirken, dass der obere Abschnitt (9) der Kette (7) darauf gleitet, wobei die Seitenwände (13) des Schlittens (30) die Bewegung des oberen Abschnitts (9) der Kette (7) enthalten und führen.

## Revendications

1. Un chariot pour chaîne de support de câbles, comprenant un corps (2) aux extrémités duquel une ou plusieurs poulies (5) sont reliées et associées à des cordes (6) fixées au niveau de leurs extrémités à un utilisateur mobile entraîné par ladite chaîne de support de câbles (7) et fixées aux extrémités de la partie supérieure (9) de ladite chaîne de support de câbles (7), ladite chaîne (7) étant associée de manière opérationnelle audit chariot (1, 20, 30) de sorte qu'une longueur (8) de ladite partie supérieure (9) n'est pas en contact avec ledit chariot (1, 20, 30), avec une configuration déterminée par gravité par les caractéristiques physiques de ses liaisons et par la charge supportée par la chaîne, alors que la partie inférieure (10) de ladite chaîne (7) est sensiblement immobile par rapport audit chariot (1, 20, 30), ledit chariot (1, 20, 30) et ladite chaîne (7) étant associés de manière opérationnelle l'un à l'autre par l'intermédiaire de différents rouleaux (18) ou lignes de rouleaux (3, 4, 15, 16) entre le chariot (1, 20, 30) et ladite partie de chaîne inférieure (10) et entre le chariot (1, 20, 30) et ladite partie de chaîne supérieure (9) respectivement, **caractérisé en ce que** ledit corps (2) dudit chariot (1) et ledit chariot (30) sont munis d'une pluralité de rouleaux dont les centres de rotation sur chaque côté du chariot (1, 30) sont disposés le long de deux lignes parallèles différentes, une ligne supérieure (3, 16) et une ligne inférieure (4, 15).

2. Le chariot pour chaîne de support de câbles selon la revendication 1, **caractérisé en ce que** lesdites lignes supérieures (3) et lignes inférieures (4) desdits rouleaux sur les deux côtés du chariot (1) sont parallèles l'une à l'autre et à l'intérieur des parois latérales (13) dudit chariot (1), lesdites lignes supérieures (3) et lignes inférieures (4) desdits rouleaux étant en contact avec ladite partie supérieure (9) de la chaîne (7) au-dessus du chariot (1) et avec la partie inférieure (10) de la chaîne (7) en dessous du chariot (1) respectivement, un profilé inférieur (11) contenant ladite partie inférieure (10), alors que lesdites parois latérales (13) du chariot (1) agissent en tant que guide pour la partie supérieure (9) de ladite chaîne (7).

3. Le chariot pour chaîne de support de câbles selon la revendication 1, **caractérisé en ce que** ledit chariot (30) est muni d'un profilé inférieur (14) ayant la forme d'un S inversé de manière à guider ladite partie inférieure (10) de ladite chaîne (7) alors que le chariot (30) repose sur ledit profilé avec les rouleaux de ladite ligne inférieure (15) tous disposés à l'extérieur de ses parois (13), alors que les rouleaux de ladite ligne supérieure (16), tous disposés à l'intérieur des parois (13) du chariot (30), amènent ladite partie supérieure (9) de la chaîne (7) à glisser dessus, les parois latérales (13) du chariot (30) contenant et guidant le mouvement de la partie supérieure (9) de la chaîne (7).
